(19) Europäisches Patentamt
European Patent Office
Office européen des brevets

(11) EP 2 063 246 A2

(12) **EUROPEAN PATENT APPLICATION**

(43) Date of publication:
27.05.2009 Bulletin 2009/22

(51) Int Cl.:
*G01M 15/11* (2006.01)

(21) Application number: 08168625.5

(22) Date of filing: 07.11.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 20.11.2007 US 986098

(71) Applicant: Delphi Technologies, Inc.
Troy, Michigan 48007 (US)

(72) Inventor: Walters, James E.
Carmel, IN 46033 (US)

(74) Representative: Denton, Michael John
Delphi European Headquarters
64 avenue de la Plaine de France
BP 65059 Tremblay-en-France
95972 Roissy Charles de Gaulle Cedex (FR)

(54) **System and method of detecting a rough road condition**

(57) A system (10) and method (100) of detecting a rough road condition is provided. The system (10) includes a shaft, a wheel (14) connected to the shaft, wherein as the shaft rotates, the wheel (14) rotates. The system (10) further includes a sensor (16) in communication with the wheel (14), wherein the sensor (16) monitors the rotation of the wheel (14), and a processor (18) in communication with the sensor (16). The processor (18) performs the steps of receiving sensor monitoring data from the sensor (16), wherein the sensor monitoring data includes at least one predetermined point of the wheel (14) sensed by the sensor (16), and the sensor monitoring data is timestamped by one of the sensor (16) and the processor (18). The processor (18) further performs the steps of forming a representative signal (107), and processing the representative signal to analyze the harmonics (108) of the wheel (14) rotation, such that a rough road condition can be detected based upon the harmonic analysis (108).

FIG. 1

EP 2 063 246 A2

**Description**

Technical Field

The present invention generally relates to a system and method of detecting a rough road condition, and more particularly, to a system and method of detecting a rough road condition when detecting a vehicle engine misfire.

Background of the Invention

Due to increasing state, federal, and/or national regulations with respect to vehicle emissions, vehicle manufacturing is regulated as to the emissions emitted by a vehicle. One exemplary way of reducing emissions emitted by a vehicle is to detect when the vehicle's internal combustion engine misfires and control other components of the vehicle accordingly. Thus, an engine misfire can be detected in order to control other components of the vehicle in order to reduce emissions of the vehicle at the time of a misfire or thereafter.

Generally, a misfire detection system on a vehicle should work on all road conditions. Typically, when a vehicle is operating on a rough road, the misfire detection system can produce false detections of misfire due to the disturbances caused by variations in the road surface. A rough road surface can cause vehicle wheel speed perturbations that are reflected back through the vehicle driveline causing engine crankshaft speed disturbances. These crankshaft speed disturbances generally interfere with the normal speed variation and can cause a false trigger of the misfire detection system. It is undesirable to falsely detect an engine misfire since other components of the vehicle are being controlled differently or altered based upon the detection of the engine misfire. Further, a user of a vehicle can be falsely informed (i.e., indicator light on a dashboard) that the vehicle needs servicing due to the engine misfiring if engine misfires are falsely detected.

One example of a rough road detection system employs the use of an accelerometer, which measures the G-force loading on a vehicle to detect rough road conditions. However, the accelerometer that is used to measure the G-force loading on the vehicle generally is not configured to perform other functions for the vehicle operation. Another exemplary system of detecting rough road conditions is using a wheel speed sensor on an anti-lock braking system (ABS). However, some vehicles do not have ABS that includes a wheel speed sensor, which can be used to detect rough road conditions.

Summary of the Invention

According to one aspect of the present invention, a rough road detection system is provided. The rough road detection system includes a shaft and a wheel connected to the shaft, wherein as the shaft rotates, the wheel rotates. The rough road detection system also includes a sensor in communication with the wheel, wherein the sensor monitors the rotational movement of the wheel. The rough road detection system further includes a processor in communication with the sensor. The processor performs the steps of receiving sensor monitoring data from the sensor, wherein the sensor monitoring data includes at least one predetermined point of the wheel sensed by the sensor, and the sensor monitoring data is timestamped by one of the sensor and the processor. The processor further performs the steps of forming a representative signal, and processing the representative signal to analyze the harmonics of the wheel rotation, such that a rough road condition can be detected based upon the harmonic analysis.

According to another aspect of the present invention, a method of detecting when a vehicle is driving on a rough road is provided. The method includes the steps of providing a wheel connected to a shaft, rotating the shaft, wherein when the shaft rotates, the wheel rotates, and sensing the rotational movement of the wheel. The method further includes the steps of timestamping the sensed rotational movement of the wheel, forming a representative signal, and processing the representative signal to analyze the harmonics of the wheel, such that a rough road condition can be detected based upon the harmonic analysis.

These and other features, advantages and objects of the present invention will be further understood and appreciated by those skilled in the art by reference to the following specification, claims and appended drawings.

Brief Description of the Drawings

The present invention will now be described, by way of example, with reference to the accompanying drawings, in which:

Fig. 1 is a plan view of a portion of a vehicle including a rough road detection system that can be used when detecting an engine misfire, in accordance with one embodiment of the present invention;

Fig. 2 is a plan view of a toothed wheel and sensor, in accordance with one embodiment of the present invention;

Fig. 3 is a chart illustrating exemplary measured amplitudes at exemplary frequencies based upon the harmonic analysis of the sensed toothed wheel, in accordance with one embodiment of the present invention; and

Fig. 4 is a flow chart illustrating a method of detecting a rough road condition when a vehicle is driving on the rough road, in accordance with one embodiment of the present invention.

Description of Preferred Embodiments

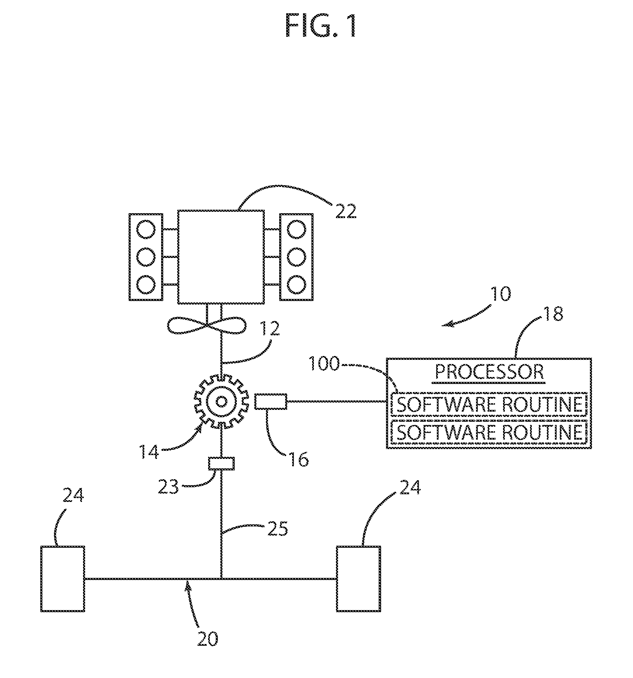

In reference to Fig. 1, a rough road detection system is generally shown at reference identifier 10. The rough road detection system 10 includes a shaft and a toothed or slotted wheel generally indicated at 14 connected to the shaft. The wheel 14 is connected to the shaft, such that when the shaft rotates, so does the wheel 14. A sensor 16 is in communication with the wheel 14, and monitors the rotation of the wheel 14. By way of explanation and not limitation, the wheel 14 can be a toothed wheel, a slotted wheel, a wheel having a defraction pattern, or the like, and the sensor 16 can be an optical sensor, a resolver sensor, or a magnetic sensor, or the like, according to one embodiment. A processor 18 is in communication with the sensor 16, and contains one or more software routines, which are executed in order to process the sensor 16 monitoring data to detect a rough road condition, as described in greater detail herein.

According to one embodiment, a wheeled automotive vehicle generally indicated at 20 includes the shaft, the wheel 14, the sensor 16, and the processor 18. The vehicle 20 also includes an internal combustion engine 22 that is operably connected to the shaft, such that the engine 22 provides the rotational energy or movement for rotating the shaft. Additionally, the crankshaft 12 can be operably connected to a transmission 23 and a driveline 25, such that the driveline 25 can rotate based upon the rotational movement of the crankshaft 12 via the transmission 23, according to one embodiment. The vehicle 20 further includes road wheels 24 that are operably connected to the shaft, wherein as the shaft rotates, so do the wheels 24, which generally results in the vehicle 20 moving. According to one embodiment, the shaft is a crankshaft and the sensor 16 is a crankshaft sensor. According to an alternate embodiment, the shaft is the driveline 25 or a driveshaft, a transmission shaft, a wheel shaft, or the like, and the sensor 16 is a driveshaft sensor or a transmission shaft sensor. In the embodiment shown, the vehicle 20 has two wheels 24 equipped with tires that frictionally engage an underlying road; however, more or fewer wheels 24 may be employed.

Generally, the processor 18 performs the steps of receiving sensor monitoring data from the sensor 16. According to one embodiment, the sensor monitoring data can be position data relating to the position or rotational movement of the wheel 14. Thus, in this embodiment, the sensor can be, but is not limited to, an optical sensor, a magnetic sensor, or the like. According to an alternate embodiment, the sensor monitoring data can be position data based upon time increments, such as determining the position of the wheel 14 at specified time increments. Thus, in this embodiment, the sensor 16 can be, but is not limited to, a resolver, or the like. It should be appreciated by those skilled in the art that other types of sensors can be used.

According to one embodiment, the processor 18 further performs the steps of timestamping the sensor monitoring data when received from the sensor 16, such as, but not limited to, timestamping when the position transitions of the wheel 14 were detected, forming a representative signal, and processing the representative signal to analyze the harmonics of the rotating wheel 14 in order to detect a rough road condition. According to an alternate embodiment, the sensor 16 timestamps the sensor monitoring data. By way of explanation and not limitation, forming a representative signal of the wheel 14 can be, but is not limited to, a speed signal, a position signal, an acceleration signal, a delta or change in position signal, or the like. According to one embodiment, detecting rough road conditions can be based on magnitude, phase, and/or spectral energy of the harmonics of interest. According to a disclosed embodiment, the sensor monitoring data includes monitoring edges of the wheel 14 that is sensed by the sensor 16, as described in greater detail below.

According to one embodiment, a speed equation can be used to form a metric representing the speed measured at each timestamp or subset, wherein the angular speed equation is:

$$\omega(n) = \frac{\Delta\Theta}{\Delta T}$$

According to the above speed equation, $\Delta\Theta$ represents the change in rotational or angular position of the wheel 14, and $\Delta T$ represents the period of time for the change in rotational movement. It should be appreciated by those skilled in the art that other signals can be used to analyze the harmonics of the rotating wheel 14.

Generally, a signal such as speed can only be calculated at set position increments, which are based upon the teeth spacing of the wheel 14, according to one embodiment. Discrete Fourier transform (DFT) equations can be used to indicate magnitude and phase of the $k^{th}$ harmonic order of rotation or subharmonics if the period for monitoring the wheel 14 is greater than a complete rotation of the wheel 14. According to one embodiment, the DFT equations are represented as follows:

$$a(k) = \frac{1}{N} \sum_{n=0}^{N-1} \omega(n) e^{-jk\frac{2\pi}{N}n}$$

$$\omega(n) = \sum_{n=0}^{N-1} a(k) e^{jk\frac{2\pi}{N}n}$$

With respect to the above DFT equations, $\omega(n)$ is the

speed waveform in the sampled-angle domain, and quantity a(k) is the result of the DFT. Typically, a(k) is a complex number that indicates the magnitude and phase for the $k^{th}$ harmonic order. The (N) value dictates what frequencies will be detectable and can be varied based upon the application, operating conditions, the shaft characteristics, the like, or a combination thereof. It should be appreciated by those skilled in the art that the DFT does not need to be executed in its complete form, as it is possible to calculate only specific harmonics.

According to one embodiment, the wheel 14 has a plurality of teeth 26 that extend circumferentially around the wheel 14. The predetermined point on the wheel 14 is a positioning gap or slot 23 between a first gear tooth 26A and a second gear tooth 26B, wherein the positioning gap 28 is a larger gap than the gaps between other teeth of the plurality of teeth 26, according to one embodiment. Thus, the positioning gap 28 is a predetermined point on the wheel 14 that provides a reference point for rotational movement of the wheel 14.

Typically, the results of the DFT equations are representations of the magnitude and phase of the determinable harmonics. According to one embodiment, the result of the DFT equations can be used to detect rough road conditions, wherein the amplitude and phase of either specific frequencies or frequency bands can be monitored and analyzed to detect the rough road condition. Typically, the phase of the DFT is related to the shaft by the positioning gap 23, according to one embodiment.

According to an alternate embodiment, the harmonic analysis includes determining a frequency of rotation (angular rotation) of the wheel 14 rotation based upon the location of the predetermined point of the wheel 14 in a period of time. Thus, the speed of the rotation of the wheel 14 can be determined, such that it can be determined how many teeth of the wheel 14 were located or sensed per a period of time, according to one embodiment. For purposes of explanation and not limitation, the number of times the predetermined point of the wheel 14 per second is detected rather than the number of events per rotation is being detected, according to one embodiment.

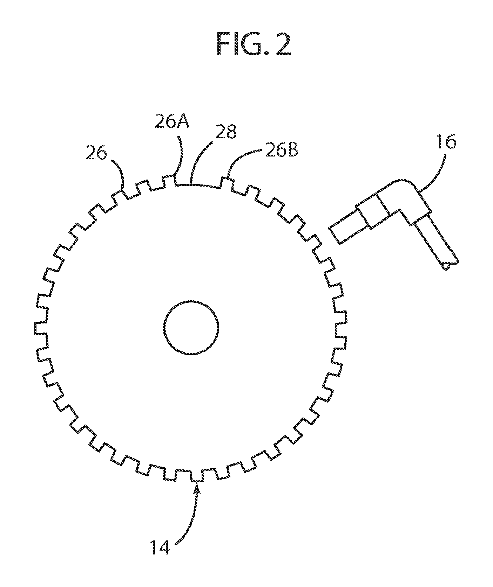

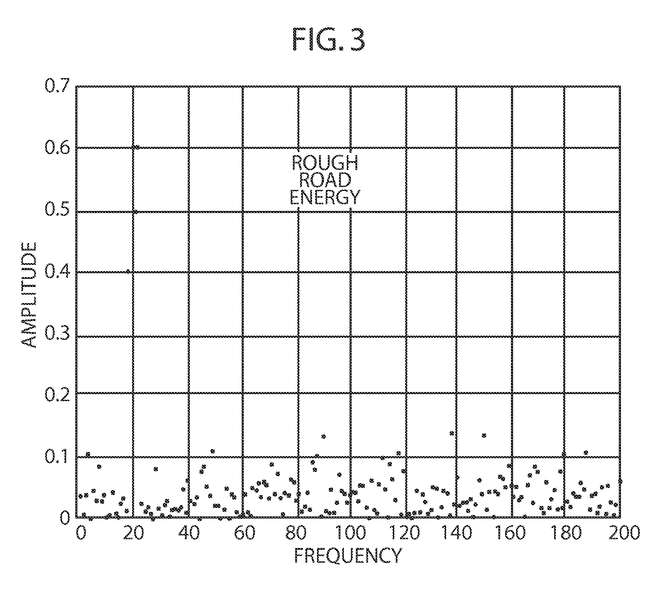

With regards to Figs. 1-3, a chart illustrating exemplary measured amplitudes at exemplary frequencies based upon the harmonic analysis of the wheel 14 is generally shown in Fig. 3, according to one embodiment. The amplitude or energy at predetermined harmonics, such as, but not limited to, approximately five hertz (5 Hz) to ten hertz (10 Hz) can be used to detect a rough road condition if the amplitude or energy of the predetermined harmonics is greater than a predetermined range or value, according to one embodiment. Thus, the harmonic analysis can include determining at least one of a magnitude and a phase at a frequency based upon the wheel rotation to detect a rough road condition, such that at least one of the magnitude and phase are compared to at least one magnitude and phase of at least one predetermined frequency. The predetermined frequency can be the same frequency with which the magnitude and/or phase are determined for or a different frequency.
According to a disclosed embodiment, the sensitivity of the harmonic analysis or the harmonic sensitivity can be controlled by setting the angular period, time period, and number of samples obtained by the sensor 16 and processed by the processor 18. Additionally or alternatively, an interpolation technique can be used to obtain uniform time spacing from angle spacing as the harmonics of interest may more naturally be dependent on time rather than engine 22 harmonic orders.
Generally, as the timestamps of the sensor information occur at fixed angular locations, the result of the DFT process will be in terms of harmonic order of angular rotation. When a shaft is rotated by an engine 22, shaft resonance can occur at predetermined frequencies in time. Thus, a fixed angle sampling can be changed to a fixed time sampling. According to one embodiment, the fixed angle sampling can be changed to a fixed sampling by interpolating between data points. For example purposes only and not limitation, if two position samples, $\theta_1$ and $\theta_2$, occurred at times $T_1$ and $T_2$ respectively then a linear interpolation would allow finding the position at any time t as:

$$\theta(t) = \frac{\theta_2 - \theta_1}{T_2 - T_1}(t - T_1) + \theta_1$$

wherein t represents an arbitrary point in time that can be defined in fixed position intervals. According to one embodiment, the spacing of the values of t can also be set to different values as the resonance frequency may change. By way of explanation and not limitation, the resonance frequency can be related to which gear is selected in the transmission. It should be appreciated by those skilled in the art that other interpolation or extrapolation techniques can be used.
By way of explanation and not limitation, when the vehicle 20 is in operation, the internal combustion engine 22 can be monitored for engine misfiring. By detecting when the engine 22 has misfired, other components of the vehicle 20 can be controlled accordingly, and the user of vehicle 20 can be notified that the engine 22 has misfired, the like, or a combination thereof The processor 18 can then receive the data from the sensor 16 in order to detect that the vehicle 20 is being operated on a rough road, which can affect the misfiring analysis. Thus, the harmonic analysis of the data conducted by the processor 18 can prevent false engine misfirings from being obtained, and therefore, prevent the other components from being altered unnecessarily or falsely notifying the user of the vehicle 20 of engine misfiring. Further, the rough road condition can be detected without adding additional components to the vehicle 20, since the processor 18 receives data from the sensor 16, which can be a crankshaft sensor, and the shaft can be a vehicle crankshaft, which both are used on the vehicle 20 for other uses, according to one embodiment.

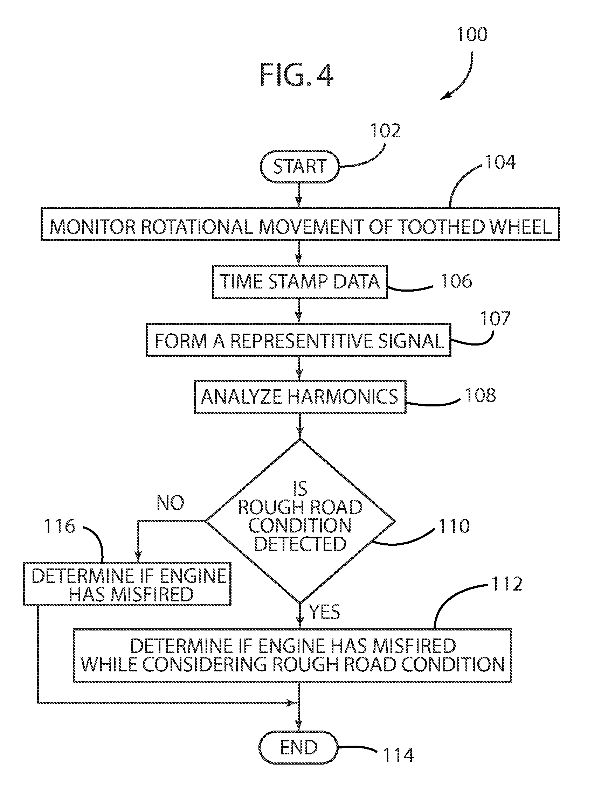

In reference to Figs. 1-2 and 4, a method of detecting when a vehicle 20 is driving on a rough road is generally shown in Fig. 4 at reference identifier 100. The method 100 starts at step 102, and proceeds to step 104, wherein the rotational movement of the wheel 14 is monitored. According to one embodiment, the wheel 14 has a plurality of teeth, which extend circumferentially around the wheel 14, wherein the sensor 16 senses the location of the teeth to monitor the rotational movement of the wheel 14.

At step 106, the data obtained by the sensor 16 is timestamped, such as, but not limited to, timestamping the transition of the angular data of the wheel 14. According to one embodiment, the monitored data is communicated from the sensor 16 to the processor 18, wherein the processor 18 timestamps the data. According to an alternate embodiment, the sensor 16 timestamps the monitored data prior to communicating the monitored data to the processor 18. At step 107, the timestamped data is used to form a representative signal. Step 107 can convert this from a fixed position-based sampling to a fixed time-based sampling. According to one embodiment, the timestamped monitored data is used to form a representative signal of the rotational movement of the wheel 14, such as, but not limited to, a change in position signal, a position signal, a speed signal, an acceleration signal, or the like.

The method 100 then proceeds to step 108, wherein the harmonics of the data obtained by the sensor 16 are analyzed. A DFT is performed using the representative signal. At decision step 110, it is determined if a rough road condition is detected. If a rough road condition is detected at decision step 110, then the method 100 proceeds to step 112, wherein it is determined if the engine 22 has misfired while considering the rough road condition. The method 100 then ends at step 114. However, if a rough road condition is not detected at decision step 110, then the method 100 proceeds to step 116, wherein it is determined if the engine 22 has misfired. The method 100 then ends at step 114.

According to an alternate embodiment, the harmonic analysis can include a time-domain algorithm to detect a frequency or frequency band. Thus, the use of the time-domain algorithm typically does not use a DFT. Generally, the time-domain algorithm is based upon determining if a frequency or frequency band is present to determine a rough road condition. Typically, the rough road detection system 10 determines if a frequency or frequency band is present to detect a rough road condition.

Advantageously, a rough road condition can be detected during vehicle 20 operation, by analyzing the harmonics of the wheel 14, which rotates with the shaft. Based upon the analyzed harmonics, it can be determined if the vehicle 20 is being operated on a rough road, with which the results can be used in an engine 22 misfire detection system. Thus, a signal indicative of the variation of the rotational movement of the wheel 14 is determined, such that an analysis of the harmonics can determine a rough road condition. Further, components that have other functions besides rough road condition detection, such as a crankshaft and crankshaft sensor, can be used, according to one embodiment.

The above description is considered that of preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

**Claims**

1. A rough road condition detection system (10) comprising:

   a shaft;
   a wheel (14) connected to said shaft, wherein as said shaft rotates, said wheel (14) rotates;
   a sensor (16) in communication with said wheel (14), wherein said sensor (16) monitors the rotation of said wheel (14); and
   a processor (18) in communication with said sensor (16), wherein said processor (18) performs the steps of:
   receiving sensor monitoring data from said sensor (16), wherein said sensor monitoring data comprises at least one predetermined point of said wheel (14) sensed by said sensor (16), and said sensor monitoring data is timestamped by one of said sensor (16) and said processor (18); forming a representative signal (107); and processing said representative signal by analyzing harmonics (108) of said wheel (14) rotation, such that a rough road condition can be detected based upon said harmonic analysis.

2. The system (10) of claim 1, wherein said harmonic analysis (108) comprises determining at least one of a magnitude and a phase at a frequency based upon said wheel (14) rotation to detect a rough road condition, such that at least one of said magnitude and said phase are compared to at least one magnitude and phase of at least one predetermined frequency.

3. The system (10) of claim 1, wherein said harmonic analysis (108) comprises determining a frequency of said wheel (14) rotation based upon a number of said at least one predetermined point of said wheel (14) that were monitored in a period of time.

**4.** The system (10) of claim 1, wherein an amplitude of a determined frequency is compared to a predetermined range of amplitudes at predetermined frequencies to detect said rough road condition, wherein said determined frequency is based upon movement of said wheel (14).

**5.** The system (10) of claim 1, wherein said shaft is on a vehicle (20) and one of a crankshaft (12), a driveshaft (25), a transmission shaft, and a wheel shaft.

**6.** The system (10) of claim 1, wherein said sensor (16) is one of a crankshaft sensor, a driveshaft sensor, a transmission shaft sensor, a resolver, and a wheel sensor.

**7.** The system (10) of claim 1, wherein said harmonic analysis (108) comprises determining a number of times said at least one predetermined point was sensed by said sensor (16) in an angular range.

**8.** The system (10) of claim 1, wherein said representative signal is one comprising of speed of said wheel (14) as a function of time, speed of said wheel (14) as a function of angular movement, acceleration of said wheel (14) as a function of time, acceleration of said wheel (14) as a function of angular movement, position of said wheel (14) as a function of time, position of said wheel (14) as a function of angular movement, change of position of said wheel (14) as a function of time, and change in position of said wheel (14) as a function of angular movement.

**9.** A method (100) of detecting when a vehicle (20) is driving on a rough road, said method (100) comprising the steps of:

> providing a wheel (14) connected to a shaft;
> rotating said shaft, wherein when said shaft rotates, said wheel (14) rotates;
> sensing (104) the rotational movement of said wheel (14);
> timestamping (106) said sensed rotational movement of said wheel (14);
> forming a representative signal (107); and
> processing said representative signal to analyze harmonics (108) of said wheel (14), such that a rough road condition can be detected based upon said harmonic analysis (108).

**10.** The method (100) of claim 9, wherein said step of analyzing harmonics (108) of said wheel comprises determining at least one of a magnitude and a phase at a frequency based upon said wheel (14) rotation to detect a rough road condition, such that at least one of said magnitude and said phase are compared to at least one magnitude and phase of at least one predetermined frequency.

**11.** The method (100) of claim 9, wherein said harmonic analysis (108) comprises determining a frequency of said wheel (14) rotation based upon a number of said predetermined points of said wheel (14) that were monitored in a period of time.

**12.** The method (100) of claim 9, wherein said harmonic analysis (108) comprises comparing an amplitude of a determined frequency to a predetermined range of amplitudes at predetermined frequencies to detect said rough road condition, wherein said determined frequency is based upon movement of said wheel (14).

**13.** The method (100) of claim 9 further comprising the step of determining if an engine (22) of a vehicle (20) has misfired while considering said rough road condition (112).

**14.** The method (100) of claim 9, wherein said harmonic analysis (108) comprises determining a number of times said at least one predetermined point was sensed by said sensor (16) in an angular range.

**15.** The method (100) of claim 9, wherein said representative signal is one comprising of speed of said wheel (14) as a function of time, speed of said wheel (14) as a function of angular movement, acceleration of said wheel (14) as a function of time, acceleration of said wheel (14) as a function of angular movement, position of said wheel (14) as a function of time, position of said wheel (14) as a function of angular movement, change of position of said wheel (14) as a function of time, and change in position of said wheel (14) as a function of angular movement.

# FIG. 1

# FIG. 2

# FIG. 3

*100*

# FIG. 4

*102*

START

*104*

MONITOR ROTATIONAL MOVEMENT OF TOOTHED WHEEL

*106*

TIME STAMP DATA

*107*

FORM A REPRESENTITIVE SIGNAL

*108*

ANALYZE HARMONICS

*110*

IS ROUGH ROAD CONDITION DETECTED

NO

*116*

DETERMINE IF ENGINE HAS MISFIRED

YES

*112*

DETERMINE IF ENGINE HAS MISFIRED WHILE CONSIDERING ROUGH ROAD CONDITION

END

*114*